# EUROPÄISCHE PATENTANMELDUNG

(11) **EP 2 073 160 A1**
(43) Veröffentlichungstag der Anmeldung: **24.06.2009**
(21) Anmeldenummer: 07024535.2
(22) Anmeldetag: 18.12.2007
(51) Int. Cl.: G06Q 20/00, G07F 7/10

(54) **Übermittlung kodierter Daten von einem Terminal zu einem zentralen Server über ein mobiles Endgerät mittels eines mehrdimensionalen Barcodes**

(71) Anmelder: Kienzle Argo Taxi International GmbH, 12103 Berlin (DE)
(72) Erfinder: Schmidt, Joachim, 10587 Berlin (DE)
(74) Vertreter: Grünecker, Kinkeldey, Stockmair & Schwanhäusser Anwaltssozietät

(57) **Zusammenfassung**

Ein Terminal eines Leistungserbringers erstellt Daten, die Informationen bezüglich einer Zahlung einer Leistung enthalten. Dabei können diese Informationen Preisinformationen, eine vorprogrammierte Zieladresse für die Abrechnung, eine eindeutige Identifikationsnummer des Terminals sowie eine Zieladresse für die Zahlungsbestätigung des Leistungserbringers enthalten. Die entstandenen Daten werden verschlüsselt und anschließend in einen mehrdimensionalen Barcode kodiert. Dieser Barcode wird vor einem mobilen Endgerät des Leistungsnutzers vom Terminal abgerufen und mittels Mobilfunk oder Internet zu einem zentralen Server übermittelt. Der zentrale Server führt die Zahlung aus und bestätigt dem Terminal oder einem weiteren mobilen Endgerät die Durchführung der Zahlung.

## Beschreibung

Immer häufiger werden Waren oder Dienstleistungen bargeldlos, beispielsweise mittels Kreditkarte oder Lastschrifteinzug, bezahlt. Dabei wird vom Dienstleister oder Warenanbieter das benötigte Equipment zur Zahlung zur Verfügung gestellt. Solch fest installierte bargeldlose Zahlungssysteme für Waren oder Dienstleistungen sind heute ein gewohntes Bild. In vielen Bereichen des alltäglichen Bedarfs, beispielsweise im Taxibereich, existieren zwar bereits Systeme, die den bargeldlosen Zahlungsverkehr ermöglichen, finden aber bei den Anbietern der Dienstleistung oder der Waren nur wenig Akzeptanz (abgesehen von z. T. hohen Disagio).

Dies liegt zum einen daran, dass für hoch mobile bargeldlose Zahlungssysteme, die beispielsweise in einem Taxi installiert sind, entsprechend teures Equipment notwendig ist, das vom Anbieter der Dienstleistung oder der Waren gewartet werden muss. Weiter muss für den reibungslosen Betrieb sichergestellt werden, dass eventuell vorhandene Akkus des hoch mobilen bargeldlosen Zahlungssystems im Einsatzfall auch geladen sind. Aus diesen und anderen Gründen sind bargeldlose Zahlungssysteme, die in hoch mobilen Einrichtungen installiert sind, vor allem in ländlichen Regionen selten anzutreffen.

Doch selbst in mehreren Groß- und Messestädten kann es mitunter schwierig sein, beispielsweise ein Taxi zu finden, das eine bargeldlose Zahlung der Beförderungsdienstleistung akzeptiert. Sollte man also als Fahrgast ein Fahrmittel benötigen und nicht über entsprechendes Kleingeld verfügen, ist man als Verbraucher oft gezwungen, auf die Dienstleistung zu verzichten oder erst entsprechendes Bargeld zu besorgen. Das kann insbesondere im Taxibereich bei einer Fahrt zum Flughafen zu einer misslichen Lage führen, wenn dadurch der gewünschte Flug nicht mehr rechtzeitig erreicht wird.

Aber auch in anderen Bereichen, wie beispielsweise beim Lösen eines Parktickets oder eines Fahrscheins für innerstädtische öffentliche Verkehrsmittel, ist heute oft noch Bargeld vonnöten. Diese Problematik ist im heutigen Zeitalter des ansonsten sehr gut akzeptierten bargeldlosen Zahlungsverkehrs vielen Geschäftsreisenden und Touristen nicht bewusst, die per se von der Verfügbarkeit bargeldloser Zahlungsmöglichkeiten ausgehen und dementsprechend nur über geringe Bargeldmittel verfügen.

Demnach liegt die Aufgabe der vorliegenden Erfindung darin, die Benutzerfreundlichkeit zu verbessern und eine breite Verfügbarkeit zu ermöglichen. Diese Aufgabe wird erfindungsgemäß durch den Gegenstand der unabhängigen Patentansprüche gelöst. Bevorzugte Ausführungsformen werden durch den Gegenstand der abhängigen Patentansprüche definiert.

Mit der vorliegenden Erfindung wird demnach die Akzeptanz von bargeldlosen Zahlungsmitteln unter den Anbietern von Dienstleistungen oder Waren erhöht und die Installations- sowie laufenden Kosten verringert. Dabei benutzt die vorliegende Erfindung vorhandenes Equipment des Kunden, der das eigentliche Interesse an einer bargeldlosen Zahlmethode hat. Die vorliegende Erfindung bietet darüber hinaus ein gesichertes überregionales Verfahren für einen bargeldlosen Zahlungsverkehr sowie die Nutzung einer weitverbreiteten Technologie, die dieses ermöglicht.

In einer Ausführungsform der Erfindung werden kodierte Daten von einem Terminal zu einem zentralen Server mittels eines mobilen Endgerätes übermittelt. Hierzu erzeugt das Terminal Daten, die Informationen bezüglich einer Zahlung enthalten. Die Daten werden in einen mehrdimensionalen Barcode kodiert. Dieser mehrdimensionale Barcode wird vom Terminal durch das mobile Endgerät abgerufen. Das mobile Endgerät überträgt hierauf Datenpakete, in denen die mit dem mehrdimensionalen Barcode kodierten Informationen enthalten sind, zum zentralen Server. Das Terminal liegt hierbei außerhalb des Übertragungspfads zwischen dem mobilen Endgerät und dem zentralen Server.

Weiter stellt die vorliegende Erfindung ein Terminal zur Verwendung in einem Übertragungssystem bestehend aus dem Terminal, einem zentralen Server und einem mobilen Endgerät, wobei das Terminal außerhalb des Übertragungspfads zwischen dem mobilen Endgerät und dem zentralen Server liegt, zur Verfügung. Das Terminal umfasst dabei Mittel zur Erzeugung von Daten, die Informationen bezüglich einer Zahlung enthalten. Des Weiteren verfügt das Terminal über Mittel zum Kodieren der Daten in einen mehrdimensionalen Barcode. Schließlich beinhaltet das Terminal Mittel zur Bereitstellung des mehrdimensionalen Barcodes zum Abruf durch das mobile Endgerät, wobei der mehrdimensionale Barcode Informationen enthält, die vom mobilen Endgerät in Datenpaketen an den zentralen Server übermittelt werden.

Des Weiteren umfasst ein erfindungsgemäßes mobiles Endgerät zur Verwendung in einem System mit einem zentralen Server und einem Terminal, das Daten, die Informationen bezüglich einer Zahlung enthalten, erzeugt, in einem mehrdimensionalen Barcode kodiert und außerhalb eines Übertragungspfads zwischen dem mobilen Endgerät und dem zentralen Server liegt, Mittel zum Abrufen des mehrdimensionalen Barcodes vom Terminal und Mittel zum Übertragen von Datenpaketen, in denen die mit dem mehrdimensionalen Barcode kodierten Informationen enthalten sind, zum zentralen Server über den Übertragungspfad.

Bevorzugte Ausgestaltungen der vorliegenden Erfindung werden im Weiteren mit Bezug auf folgende Zeichnungsfiguren im Detail beschrieben. Hierbei zeigen die Zeichnungen im Einzelnen:
- Fig. 1a-d: verschiedene exemplarische zweidimensionale Barcodes;
- Fig. 2: ein Übertragungssystem für kodierte Daten von einem Terminal zu einem zentralen Server mittels eines mobilen Endgeräts gemäß einer Ausführungsform der Erfindung; und
- Fig. 3: ein Flussdiagramm einer Ausführungsform der vorliegenden Erfindung.

Strich- oder Barcodes als optoelektronisch lesbare Schrift, die aus verschieden breiten parallelen Strichen und Lücken besteht, sind eine heute weit verbreitete Art, Daten maschinell einzulesen und elektronisch weiterzuverarbeiten. Die Daten eines Strichcodes werden mit optischen Lesegeräten, wie beispielsweise Barcode-Lesegeräten (Scannern) oder Kameras, eingelesen und dann von datenverarbeitenden Einrichtungen weiterverarbeitet. Dabei gibt es für verschiedene Einsatzzwecke die unterschiedlichsten Typen von Barcodes.

Obwohl auch heute noch die verbreitetsten Barcodes eindimensionale (1 D-Codes) Barcodes sind, d.h. die Information wird nur entlang einer räumlichen Dimension kodiert, wurden schon Ende der 1980er-Jahre zweidimensionale Barcodes (2D-Codes oder 2D-Barcodes) entwickelt, die zwei räumliche Dimensionen verwenden, um Information zu kodieren. Diese können aus gestapelten 1 D-Codes, in Zeilen angeordnet sein oder als echter Flächencode (Matrixcode) dargestellt sein.

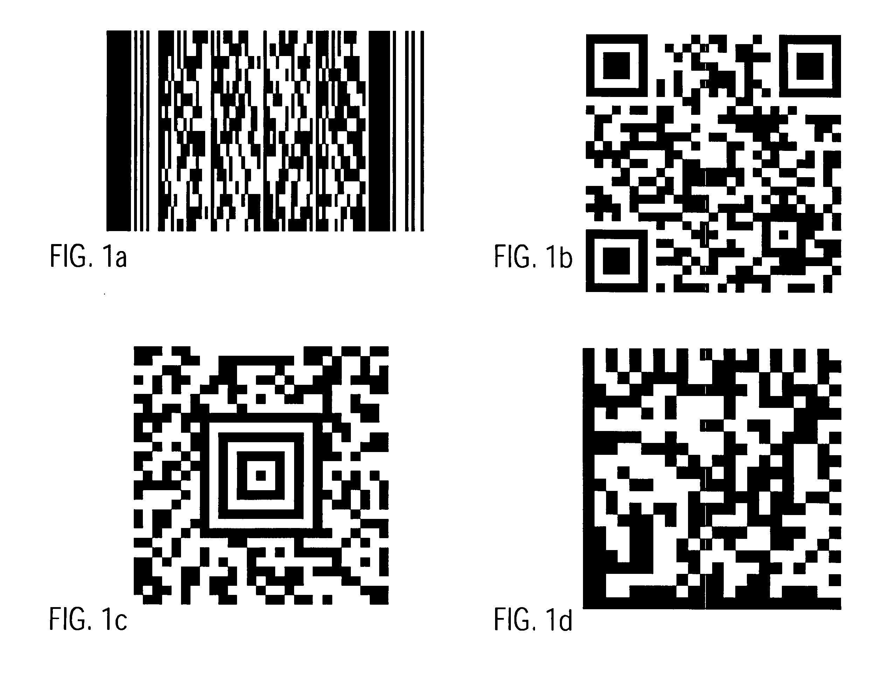

Der PDF ("portable data file") 417 aus Fig. 1 a ist ein Beispiel eines gestapelten 2D-Barcodes. Beispiele von Matrixcodes sind in Fig. 1 b bis 1 d wiedergegeben. Fig. 1 b zeigt den sogenannten QR(quick response)-Code, der in Japan ein sehr verbreiteter 2D-Barcode ist. Der Aztec-Code von Fig. 1 c ist eine eigenständige 2D-Codeart. Die Deutsche Bahn und die Schweizerischen Bundesbahnen verwenden diese 2D-Barcodeart auf ihren Online-Tickets bzw. Mobile Tickets (MMS-Ticket). Des Weiteren verwendet auch die US-Regierung diesen Code zum Speichern der biometrischen Daten bei der Ein- und Ausreise. Als letztes Beispiel gibt Fig. 1 d den sogenannten DataMatrix-2D-Barcode wieder, der zur Zeit stark an Bedeutung gewinnt. Beispielsweise basieren elektronische Briefmarken (STAMPIT), der 2D-Pharmacode, Teilekennzeichnungen in Luft- und Raumfahrtindustrie und in der Medizintechnik auf diesem Code.

Neuere Entwicklungen definieren mehrdimensionale Barcodes. Hierbei wird der Begriff der Dimension als Freiheitsgrad verstanden, der für die Kodierung von Information zur Verfügung steht. Beispielsweise wurden sogenannte 3D-Barcodes entwickelt, bei denen, zusätzlich zu den räumlichen Dimensionen, Information im Farbton, der Farbsättigung oder der Farbhelligkeit kodiert werden. Außerdem sind 3D-Barcodes denkbar, bei denen alle drei Raumdimensionen zur Kodierung von Information ausgenutzt werden. Weiter wurden 4D-Barcodes vorgeschlagen, bei denen die vierte Dimension die Zeit ist, d. h. die dreidimensionalen Barcodes, bei denen räumliche Dimensionen und die Farbe zur Kodierung von Information verwendet werden, sind animiert.

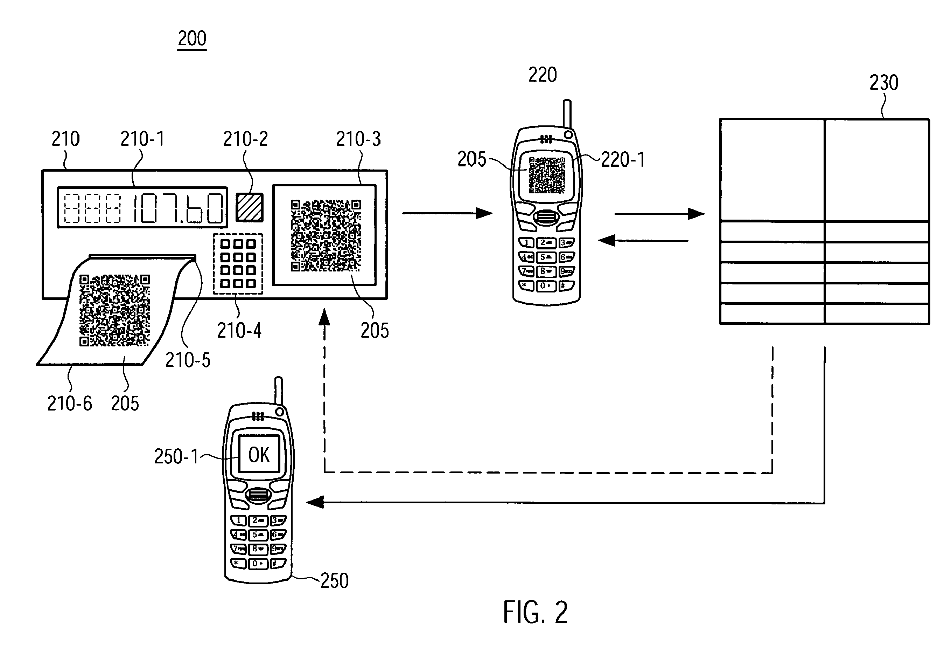

In Ausführungsformen der Erfindung werden mehrdimensionale Barcodes (beispielsweise die oben eingeführten 2D-, 3D- oder 4D-Barcodes) benutzt, um eine bargeldlose Bezahlung von Dienstleistungen und/oder Waren zu ermöglichen. Fig. 2 gibt ein exemplarisches System 200 gemäß einer Ausführungsform der Erfindung für die Übertragung kodierter Daten wieder. Dieses System ermöglicht, als ein Beispiel, das bargeldlose Zahlen von Dienstleistungen und/oder Waren. Das Übertragungssystem 200 besteht aus einem Terminal 210, einem ersten mobilen Endgerät 220, einem zentralen Serversystem 230 und optional aus einem zweiten mobilen Endgerät 250. Dabei kann das mobile Endgerät 220 vom Terminal 210 Informationen abrufen und mit dem zentralen Server 230 kommunizieren. Der zentrale Server 230 kann Verbindungen mit dem mobilen Endgeräten 220 sowie 250 aufbauen und unterhalten. In einigen Ausführungsformen kann der zentrale Server 230 auch zum Terminal 210 Nachrichten übermitteln oder das Terminal Informationen vom mobilen Endgerät 220 abrufen.

Das Terminal 210 kann in Ausführungsformen der Erfindung ein Taxameter, ein Parkscheinautomat, eine Kasse in einem Supermarkt, Teil einer Zapfsäule an einer Tankstelle oder ein beliebiges Gerät zur Ermittlung von Gebühren für eine Dienstleistung oder den Wert von Waren sein. Das mobile Endgerät 220 oder 250 kann in Ausführungsformen der Erfindung beispielsweise ein Mobiltelefon, ein PDA oder ein mobiler Computer sein. Das mobile Endgerät 220 verfügt hierbei in Ausführungsformen der Erfindung über eine Foto- und/oder Videokamera, über einen Barcodescanner und/oder Schnittstellen für kabellose Nachrichtenübertragung im Hochfrequenzbereich. Kabellose Nachrichtenübertragungstechniken, die in Ausführungsformen der Erfindung Anwendung finden, können beispielsweise IrDA (Infrared Data Association), Bluetooth oder Techniken auf der Basis eines IEEE 802.11-Standards sein.

Vorzugsweise umfasst das Terminal 210 ein Display 210-1, ein weiteres Display 210-3 und eine Druckereinheit 210-5. Des Weiteren stellt das Terminal 210 ein Bedienfeld 210-4 zur Verfügung. Mit Hilfe der Tasten des Bedienfeldes 210-4 können alphanumerische Zeichenfolgen in das Terminal 210 eingegeben werden. Des Weiteren weist das Terminal 210 eine Auswahltaste 210-2 auf, mittels derer die Verwendung eines Verfahrens (auch "Codeabrechnung" genannt), in dem das bargeldlose Zahlen von Dienstleistungen und/oder Waren durch Übermittlung von kodierten Daten zum zentralen Server 230 über ein mobiles Endgerät 220 durchgeführt wird, ausgewählt werden kann. In einigen Ausführungsformen der Erfindung verfügt das Terminal 210 über Schnittstellen für kabellose Nachrichtenübertragung im Hochfrequenzbereich, wie etwa Schnittstellen für IrDA, Bluetooth oder Techniken auf der Basis eines IEEE 802.11-Standards. Das Terminal kann auch in einigen Ausführungsformen über eine Foto- oder Scaneinheit verfügen, mittels derer mehrdimensionale Barcodes in das Terminal 210 eingelesen werden können.

Das Display 210-1 zeigt als Beispiel einen, vom Terminal ermittelten, Zählwert an. Wie oben bereits erwähnt, kann in Ausgestaltungsformen der vorliegenden Erfindung das Terminal 210 beispielsweise ein Taxameter, ein Parkautomat, eine konventionelle Kasse (z.B. in einem Supermarkt), ein Teil einer Zapfsäule, eine Zähleinheit eines Solariums oder Ähnliches sein. Unter der Annahme, dass das Terminal 210 ein Taxameter ist, entspricht der Zählwert (107,60), der auf dem Display 210-1 angezeigt wird, dem aktuell zu zahlenden Fahrpreis. Ist das Terminal eine Kasse in einem Supermarkt, so entspricht der Zählwert, der auf dem Display 210-1 angezeigt wird, dem aktuell zu zahlenden Betrag für die bis dato erfassten Waren. Ein weiteres Beispiel eines Zählwerts ist die an einem Parkscheinautomat ausgewählte Anzahl an Minuten, für die ein Parkschein gelöst werden soll, oder der an einem Parkscheinautomat eingegebene Betrag, für den ein Parkschein gelöst werden soll. Ist das Terminal 210 Teil einer Zapfsäule einer Tankstelle, so kann der Wert, der auf dem Display 210-1 angezeigt wird, beispielsweise die Menge an abgegebenem Benzin sein oder der zu zahlende Betrag.

Hat das Terminal 210 den Zählvorgang abgeschlossen, so kann der Anbieter der Dienstleistung oder Waren oder der Empfänger der Dienstleistung oder Waren mittels der Bedientaste 210-2 ein bargeldloses Zahlverfahren aktivieren, das kodierte Daten zum zentralen Server 230 übermittelt. Der Zahlvorgang selbst wird dann vom zentralen Server, der als Abrechnungsstelle fungiert, angewiesen beziehungsweise ausgeführt. Wird der Auswahlschalter 210-2 betätigt, so erstellt das Terminal 210 einen mehrdimensionalen Barcode 205, der notwendige Protokolldaten und relevante Informationen bezüglich des Zahlvorgangs enthält, wie beispielsweise den Namen des Dienstleisters oder des Verkäufers, Kontodaten des Dienstleisters oder Verkäufers, den zu zahlenden Betrag, Identifikationsnummer des Terminals 210 oder der zu zahlenden Dienstleistung, Adresse des zentralen Servers 230, Adresse des weiteren mobilen Endgeräts 250 und/oder des Terminals 210, Datum/Uhrzeit der zu leistenden oder der geleisteten Dienstleistung, Tarife oder ähnliche Daten.

Dieser mehrdimensionale Barcode 205 wird in Ausführungsformen der Erfindung auf dem Display 210-3 des Terminals 210 dargestellt. In alternativen Ausführungsformen wird der mehrdimensionale Barcode 205 mittels der Druckereinheit 210-5 auf einem Blatt Papier 210-6 ausgedruckt. In weiteren alternativen Ausführungsformen verfügt das Terminal 210 sowohl über die Druckereinheit 210-5 als auch über das Display 210-3. In solchen Ausführungsformen kann beispielsweise ausgewählt werden, auf welche Art und Weise der Barcode 205 dem mobilen Endgerät 220 zur Verfügung gestellt werden soll.

Der mehrdimensionale Barcode 205 kann vom mobilen Endgerät 220 abgerufen werden. Dies kann entweder durch abfotografieren des mehrdimensionalen Barcodes 205 vom Display 210-3 oder Ausdruck 210-6 geschehen oder, in einer alternativen Ausführungsform, durch Abrufen einer Nachricht vom Terminal 210 durch das mobile Endgerät 220, die den mehrdimensionalen Barcode enthält. Die Nachricht kann hierbei beispielsweise mittels IrDA (Infrared Data Association), Bluetooth oder einer anderen kabellosen Nachrichtenübertragungstechnik, wie beispielsweise einer Technik auf der Basis eines IEEE 802.11-Standards, stattfinden.

In einigen Ausführungsformen verfügt das mobile Endgerät 220 über eine Anwendung, die den mehrdimensionalen Barcode interpretieren und in Datenpakete umwandeln kann. In solchen Ausführungsformen sendet das mobile Endgerät 220 Datenpakete, in denen die mit dem mehrdimensionalen Barcode kodierten Informationen enthalten sind, an den zentralen Server 230 über ein Mobilfunknetz oder über das Internet. In anderen Ausführungsformen, in denen auf dem mobilen Endgerät 220 keine Anwendung zur Interpretation mehrdimensionaler Barcodes installiert ist, sendet das mobile Endgerät 220 beispielsweise eine MMS (Multimedia Messaging Service) mit dem Bild des mehrdimensionalen Barcodes an den zentralen Server 230. In solchen Fällen wird die Zieladresse des zentralen Servers entweder vom Terminal 210 direkt, d.h. nicht im mehrdimensionalen Barcode kodiert, an das mobile Endgerät 220 übertragen oder die Zieladresse des zentralen Servers 230 muss in das mobile Endgerät 220, beispielsweise über eine Tastatur, eingegeben werden. In anderen Ausgestaltungsformen kann das mobile Endgerät 220, das ein Mobiltelefon, ein PDA oder ein tragbarer Computer sein kann, eine Nachricht über das Internet zum zentralen Server 230 senden, die den mehrdimensionalen Barcode als Bild oder als Datenpakete, in denen die Informationen, die im mehrdimensionalen Barcode enthalten sind, beinhaltet. Eine solche Nachricht kann beispielsweise eine E-Mail sein.

Wenn eine Nachricht vom mobilen Endgerät 220 beim zentralen Server 230 eingeht, identifiziert der zentrale Server 230 die Absendeadresse des mobilen Endgeräts 220 (Mobilfunknummer, IP-Adresse oder MAC-Adresse) und prüft, ob für dieses mobile Endgerät ein Benutzerkonto auf dem mobilen Server vorliegt. In anderen Ausführungsformen kann die Nachricht, die vom mobilen Endgerät 220 zum zentralen Server 230 gesendet wird, auch Informationen zur Eröffnung eines Benutzerkontos enthalten. In anderen Alternativen kann die Nachricht, die vom mobilen Endgerät 220 an den Server 230 gesendet wird, Daten für eine einmalige Transaktion enthalten.

Der Server dekodiert den mehrdimensionalen Barcode der Nachricht und sendet in einer Ausgestaltungsform der Erfindung Kontrollinformationen, d.h. die dekodierten Informationen, auf deren Basis eine Zahlung ausgeführt wird, zurück an das mobile Endgerät 220. Werden die Kontrollinformationen vom mobilen Endgerät 220 (z.B. bei Übereinstimmung) bestätigt, so weist der zentrale Server 230, der als Abrechnungsstelle fungiert, eine Zahlung von einem Konto oder einer Kreditkarte, die mit dem mobilen Endgerät in Verbindung steht (beispielsweise ein Konto oder eine Kreditkarte des Betreibers des mobilen Endgeräts 220), an ein Konto, das mit dem Terminal 210 in Verbindung steht (beispielsweise auf ein Konto des Betreibers des Terminals), an. Beispielsweise kann ein solches Konto dem Eigentümer des Terminals 210, wie beispielsweise im Falle eines Taxameters dem Betreiber des Taxiunternehmens, im Falle eines Parkscheinautomats, der Stadt, in dem der Parkscheinautomat steht, zugeordnet sein. In anderen Ausführungsformen wird der zu zahlende Betrag beispielsweise an einen Mobilfunk- oder Internetprovider des mobilen Endgeräts 220 weitergeleitet, der dann die Zahlung auf der Abrechnung der Mobilfunk- oder Internetdienstleistung des mobilen Endgeräts 220 verbucht.

Ist die Zahlung erfolgreich ausgeführt oder, in manchen Ausführungsformen, ein belastbares Benutzerkonto für das mobile Endgerät 220 vorhanden, so sendet der zentrale Server 230 in einigen Ausgestaltungsformen der vorliegenden Erfindung eine Bestätigungsnachricht an das Terminal 210. In anderen Ausgestaltungsformen sendet der zentrale Server 230 die Bestätigungsnachricht an ein weiteres mobiles Endgerät 250, das diese Bestätigungsnachricht 250-1 auf einem Display anzeigen kann. In wiederum anderen Ausführungsformen sendet der zentrale Server 230 die Bestätigungsnachricht an das mobile Endgerät 220 in Form eines mehrdimensionalen Barcodes. Das mobile Endgerät 220 zeigt dann den mehrdimensionalen Barcode auf dem Display 220-1 an. Das Terminal 210 oder das weitere mobile Endgerät 250 fotografiert diesen mehrdimensionalen Barcode ab oder scannt ihn ein, dekodiert den Barcode und kann so die Bestätigungsnachricht im Klartext anzeigen oder weiterverarbeiten. Diese Ausführungsformen haben den Vorteil, dass das Terminal 210 oder das weitere mobile Endgerät 250 nicht mit dem zentralen Server 230 direkt in Verbindung treten müssen.

Die Daten, die zum Senden der Bestätigungsnachricht notwendig sind, wie beispielsweise Adresse des Terminals 210 oder des weiteren mobilen Endgeräts 250, entnimmt der zentrale Server 230 den Daten, die im mehrdimensionalen Code 205 kodiert sind.

Dabei ist anzumerken, dass im System 200 das Terminal 210 außerhalb des Übertragungspfades zwischen dem mobilen Endgerät 220 und dem zentralen Server 230 liegt. Das heißt, das Terminal 210 nimmt nach dem Abruf der Daten durch das mobile Endgerät 220 vom Terminal 210 keinen Einfluss mehr auf den Nachrichtenweg und die Nachricht, die vom mobilen Endgerät 220 an den zentralen Server 230 gesendet wird.

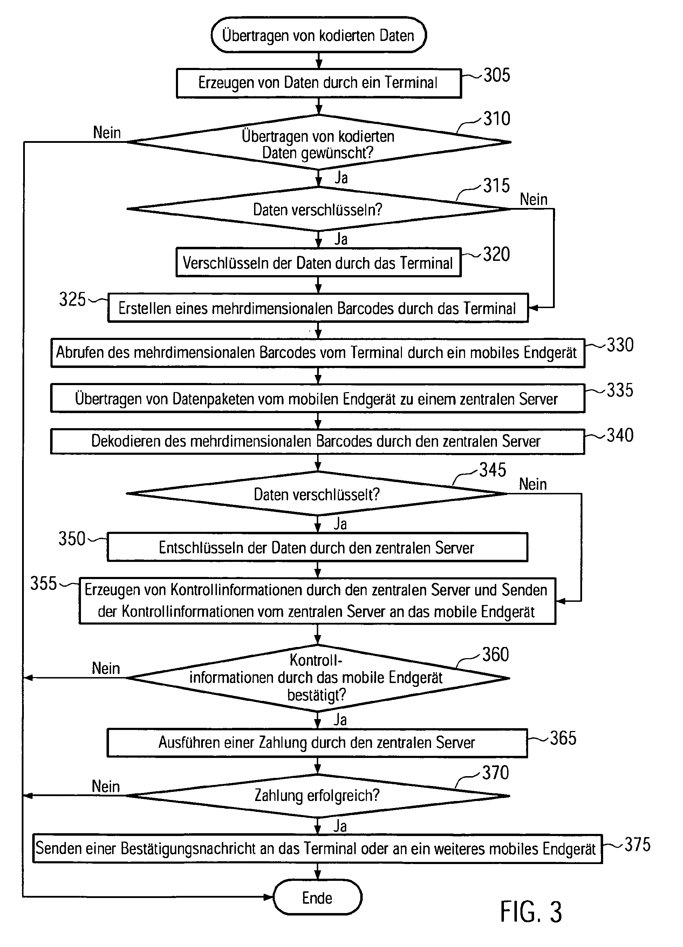

Fig. 3 zeigt ein Verfahren zur Übermittlung kodierter Daten von einem Terminal zu einem zentralen Server mittels eines mobilen Endgeräts, wie es beispielsweise im System 200 der Fig. 2 Anwendung findet. Im Schritt 305 erzeugt das Terminal 210 Daten. In manchen Ausführungsformen der vorliegenden Erfindung ermittelt das Terminal 210 hierfür einen Zählwert wie oben unter Bezugnahme auf Fig. 2 beschrieben. Ein solcher Zählwert kann beispielsweise eine gefahrene Strecke in Kilometern, falls das Terminal 210 ein Taxameter ist, ein aufsummierter Wert von einzelnen Warenwerten, wenn das Terminal eine Kasse in einem Supermarkt ist oder Ähnliches sein. In anderen Ausführungsformen kann der Zählwert, der in den meisten Ausführungsformen der Erfindung proportional zum zu zahlenden Betrag ist oder direkt den zu zahlenden Betrag angibt, auch mittels der Tasten des Bedienfeldes 210-4 in das Terminal 210 eingegeben werden. Das Terminal stellt nun alle notwendigen Daten zusammen, die für einen Bezahlvorgang notwendig sind. So wird in manchen Ausführungsformen der Erfindung mittels Tasten des Bedienfeldes 210-4 eine Mobilfunknummer oder IP-Adresse eines weiteren mobilen Endgeräts 250 eingegeben, an das eine Bestätigungsnachricht für eine erfolgreiche Zahlung gesendet werden soll. In anderen Ausführungsformen wird diese IP-Adresse oder Mobilfunknummer aus dem Speicher des Terminals 210 geladen. In wiederum anderen Ausführungsformen soll die Bestätigungsnachricht direkt an das Terminal 210 gesendet werden, welche auch über eine IP-Adresse oder Mobilfunknummer verfügt. Außerdem fügt das Terminal 210 beispielsweise das aktuelle Datum, den Tarif, den zu zahlenden Betrag, die Seriennummer des Geräts oder eine Identifikationsnummer des geleisteten Service (im Falle eines Taxameters z.B. die Taxikonzessionsnummer) sowie eine Zieladresse des zentralen Servers 230 hinzu.

Im Schritt 310 wird nun ermittelt, ob das Bezahlen mittels Übertragen von kodierten Daten an den zentralen Server 230 gewünscht ist. Dies kann beispielsweise geschehen, indem die Taste 210-2 für die Auswahl des Bezahlens mittels Übertragung von kodierten Daten aktiviert wird. Wird ermittelt, dass ein solches Verfahren nicht gewünscht ist, so endet der Prozess und der Kunde oder Empfänger der Dienstleistung bezahlt die Dienstleistung auf herkömmliche Art und Weise, beispielsweise mittels Bargeld. Wird hingegen im Schritt 310 ermittelt, dass das Übertragen von kodierten Daten zum zentralen Server 230 gewünscht ist, so kann in einer Ausführungsform der Erfindung in Schritt 315 entschieden werden, ob die Daten, die für den Bezahlvorgang notwendig sind, vom Terminal 210 verschlüsselt werden sollen oder nicht. Eine Verschlüsselung der Daten gewährleistet, dass die im Schritt 305 erzeugten Daten auf dem Übermittlungsweg vom Terminal 210 über das mobile Endgerät 220 um zentralen Server 230 nicht verfälscht oder manipuliert werden können..

Wird im Schritt 315 entschieden, dass die vom Terminal im Schritt 305 zusammengestellten Daten nicht verschlüsselt werden sollen, so folgt dem Schritt 315 direkt der Schritt 325, in dem das Terminal 210 aus den zusammengestellten Daten einen mehrdimensionalen Barcode erstellt. Wird hingegen im Schritt 315 ermittelt, dass die vom Terminal 210 zusammengestellten Daten verschlüsselt werden sollen, so wird dies im Schritt 320 durch das Terminal 210 veranlasst und durchgeführt.

Bei dem Vorgang der Verschlüsselung, der im Schritt 320 durchgeführt wird, werden die Informationen, die vom Terminal 210 für den Bezahlvorgang im Schritt 305 zusammengestellt worden sind, mittels eines herkömmlichen Verschlüsselungsverfahrens in eine unleserliche, d.h. nicht einfach interpretierbare Form umgewandelt. Eine Ausnahme bildet in solchen Ausführungsformen, in denen das Terminal 210 die Zieladresse des zentralen Servers 230 in den Daten, die in einen mehrdimensionalen Barcode kodiert werden sollen, mitzusammenstellt, diese Zieladresse. Diese Zieladresse des zentralen Servers 230 wird im Klartext übermittelt, da sie vom mobilen Endgerät 220 interpretiert und angewählt werden muss. In anderen Ausführungsformen wird die IP-Adresse des zentralen Servers 230 oder die Mobilfunknummer des zentralen Servers 230 direkt am mobilen Endgerät 220 eingegeben und diese Information wird somit nicht vom Terminal 210 zur Verfügung gestellt. In wieder anderen Ausführungsformen sendet das Terminal 210 auf andere Art und Weise die Zieladresse des zentralen Servers 230 zum mobilen Endgerät 220. Bei der Verschlüsselung können sowohl symmetrische als auch asymmetrische Verschlüsselungsverfahren verwendet werden. Bei symmetrischen Verschlüsselungsverfahren, haben das Terminal 210 und der zentrale Server 230 jeweils denselben Schlüssel zum Ver- und Entschlüsseln. Diese müssen vor Beginn der Kommunikation sicher ausgetauscht werden. In anderen Ausführungsformen der vorliegenden Erfindung können asymmetrische Verschlüsselungsverfahren verwendet werden. Hierbei kann beispielsweise vom zentralen Server 230 ein Schlüsselpaar generiert werden: ein PuplicKey und ein PrivatKey. Der PuplicKey wird dem Terminal 210 zur Verfügung gestellt und das Terminal 210 verwendet diesen Schlüssel, um die Informationen, die das Terminal 210 für den Bezahlvorgang im Schritt 305 erzeugt hat, oder einen symmetrischen Schlüssel, den das Terminal 210 zur Verschlüsselung der im Schritt 305 erzeugten Daten erstellt, im Schritt 320 zu verschlüsseln. Der zentrale Server 230 bleibt im Besitz des PrivatKeys, der zur Entschlüsselung der vom Terminal 210 verschlüsselten Daten oder des vom Terminal 210 verschlüsselten symmetrischen Schlüssels nötig ist.

In einer Ausführungsform der Erfindung werden noch einmal alle für die Bezahlung im Schritt 305 erzeugten Daten auf einem Display des Terminals 210 angezeigt und müssen bestätigt werden, bevor der Schritt 325 ausgeführt wird.

Im Schritt 325 erstellt das Terminal 210 entweder aus den im Schritt 320 verschlüsselten Daten oder direkt aus den im Schritt 305 zusammengestellten Daten einen mehrdimensionalen Barcode. Der mehrdimensionale Barcode kann dabei irgendein zweidimensionaler, dreidimensionaler oder vierdimensionaler Barcode, wie oben beschrieben, sein. Das Terminal 210 kann diesen mehrdimensionalen Barcode dem mobilen Endgerät 220 auf mehrere Art und Weisen zur Verfügung stellen. In manchen Ausführungsformen stellt das Terminal 210 eine Infrarot-, Bluetooth- oder eine den IEEE 802.11-Standards konforme Schnittstelle zur Verfügung, über die das mobile Endgerät 220 den mehrdimensionalen Barcode abrufen kann. In anderen Ausführungsformen stellt das Terminal 210 den mehrdimensionalen Barcode auf dem Display 210-3 dar. Handelt es sich um einen vierdimensionalen Barcode, so ist die Darstellung des mehrdimensionalen Barcodes 205 eine Folge von sich ändernden dreidimensionalen Barcodes, die die Information in räumlichen Dimensionen und Farbdimensionen kodieren. In alternativen Ausführungsformen druckt das Terminal 210 den Barcode mittels der Druckereinheit 210-5 aus. In solchen Ausführungsformen werden nur solche Barcodes unterstützt, die die Information in räumliche und/oder Farbdimensionen kodieren. In manchen Ausführungsformen besitzt das Terminal 210 sowohl eine Druckereinheit, um den mehrdimensionalen Barcode auszudrucken, als auch ein Display, um den mehrdimensionalen Barcode anzuzeigen, und Schnittstellen, um den mehrdimensionalen Barcode mittels hochfrequenter Nachrichtentechnik (wie Infrarotübertragung, Bluetooth oder nach einem der IEEE 802.11-Standards) zu übertragen. In solchen Ausführungsformen kann am Terminal 210 ausgewählt werden, wie der mehrdimensionale Barcode 205 dem mobilen Endgerät 220 zur Verfügung gestellt werden soll.

Im Schritt 330 ruft das mobile Endgerät 220 den bereitgestellten mehrdimensionalen Barcode 205 ab. Wird der mehrdimensionale Barcode 205 auf dem Display 210-3 des Terminals 210 dargestellt, so kann dieser mittels einer Fotokamera, die am mobilen Endgerät 220 installiert ist, abfotografiert werden. In anderen Ausführungsformen verfügt das mobile Endgerät 220 über einen Scanner, der den mehrdimensionalen Barcode 205 vom Display 210-3 abscannen kann. Wird vom Terminal 210 ein mehrdimensionaler Barcode angezeigt, der auch die zeitliche Dimension zur Kodierung der Information verwendet, so kann dieser mehrdimensionale Barcode von einer Videokamera, die vom mobilen Endgerät 220 zur Verfügung gestellt wird, aufgezeichnet werden. Auf ähnliche Art und Weise findet die Übertragung des mehrdimensionalen Barcodes statt, wenn das Terminal 210 den mehrdimensionalen Barcode 205 mittels der Druckereinheit 210-5 auf ein Blatt Papier 210-6 ausgibt. In anderen Ausführungsformen ruft das mobile Endgerät 220 den mehrdimensionalen Barcode 205 mittels eines Verfahrens konventioneller Nachrichtenübertragungen im hochfrequenten Bereich ab (IrDA, Bluetooth oder einer Technik gemäß einem der IEEE 802.11 Standards). In solchen Ausführungsformen können die vom Terminal im Schritt 305 erzeugten Daten auch direkt abgerufen werden ohne vorher in einen mehrdimensionalen Barcode kodiert zu werden. Dabei können die so abgerufenen Daten entweder verschlüsselt oder unverschlüsselt vorliegen.

Im Schritt 335 überträgt das mobile Endgerät 220 Datenpakete, die die Informationen, die im mehrdimensionalen Barcode kodiert sind, enthalten, an den zentralen Server 230. Diese Übertragung kann beispielsweise über das Internet oder über ein Mobilfunknetz stattfinden. In manchen Ausführungsformen ist auf dem mobilen Endgerät 220 eine Anwendung installiert, die es dem mobilen Endgerät 220 ermöglicht, den mehrdimensionalen Barcode zu interpretieren. In solchen Ausführungsformen, kann das mobile Endgerät 220 beispielsweise die Zieladresse des zentralen Servers 230 auf diese Art und Weise herausfinden, da die Zieladresse des zentralen Servers unverschlüsselt vom Terminal 210 in den mehrdimensionalen Barcode 205 kodiert worden ist. In anderen Ausführungsformen muss die Zieladresse des Servers 230 direkt in das mobile Endgerät 220 eingegeben werden. Verfügt das mobile Endgerät 220 über eine Anwendung, die den mehrdimensionalen Barcode 205 interpretieren kann, so kann beispielsweise in manchen Ausführungsformen der mehrdimensionale Barcode 205 vom mobilen Endgerät 220 dekodiert werden und die dekodierte Information in Form von Datenpaketen zum zentralen Server 230 übermittelt werden.

In anderen Ausführungsformen wird der mehrdimensionale Barcode direkt an den zentralen Server 230 vom mobilen Endgerät 220 weitergeleitet. Dies kann beispielsweise mittels Senden einer MMS, die ein Bild des mehrdimensionalen Barcodes enthält oder einer E-mail, die eine Bilddatei des mehrdimensionalen Barcodes enthält geschehen. Allgemein kann das mobile Endgerät 220 Datenpakete, die eine Bilddatei des mehrdimensionalen Barcodes umfassen, an den zentralen Server 230 übertragen. Fachleute sind sich im Klaren darüber, dass solche Verfahren auch für mobile Endgeräte 220 geeignet sind, die nicht über eine Anwendung verfügen, um den mehrdimensionalen Barcode 205 zu dekodieren.

In einigen Ausführungsformen baut das mobile Endgerät 220 eine gesicherte und verschlüsselte Verbindung mit dem zentralen Server 230 auf. In anderen Ausführungsformen, wird auf eine zusätzliche Verschlüsselung und Sicherung der Übertragen vom mobilen Endgerät 220 zum zentralen Server 230 verzichtet.

Es ist zu beachten, dass das Terminal 210 außerhalb des Übertragungspfades zwischen dem mobilen Endgerät 220 und dem zentralen Server 230 liegt. Das heißt, das Equipment, das zum Absenden der Nachricht nötig ist, wird ausschließlich vom mobilen Endgerät 220 zur Verfügung gestellt.

Im Schritt 340 empfängt der zentrale Server 230 den mehrdimensionalen Barcode 205, der vom mobilen Endgerät 220 im Schritt 335 übertragen worden ist und dekodiert diesen, wenn nötig. Falls die vom Terminal 210 im Schritt 305 erzeugten Daten im Schritt 320 verschlüsselt worden sind, so wird dies im Schritt 345 festgestellt und die verschlüsselten Daten im Schritt 350 vom zentralen Server entschlüsselt.

In manchen Ausführungsformen der vorliegenden Erfindung werden dann im Schritt 355 vom zentralen Server Kontrollinformationen erstellt. Diese Kontrollinformationen können beispielsweise sämtliche Informationen enthalten, die vom Terminal 210 im Schritt 305 erzeugt worden sind. In anderen Ausführungsformen enthalten die Kontrollinformationen nur Teile der Informationen, die vom Terminal 210 erzeugt worden sind, nämlich solche, die wichtig für einen Empfänger einer Dienstleistung oder Käufer von Waren sind, wie beispielsweise der zu zahlende Betrag. Diese Kontrollinformationen werden dann ebenfalls im Schritt 355 an das mobile Endgerät 220 gesendet. In anderen Ausführungsformen wird dieser Schritt weggelassen und das Verfahren führt direkt nach dem Schritt 350 den Schritt 365 aus. Ist der Schritt 355 jedoch ausgeführt worden, so wartet der zentrale Server 230 auf eine Antwort des mobilen Endgeräts 220. Bestätigt das mobile Endgerät 220 im Schritt 360 die Kontrollinformation, so führt der zentrale Server im Schritt 365 die anstehende Zahlung aus oder weist die Zahlung an. Dies kann entweder durch Belasten eines vom Benutzer vorher angegebenen Kontos geschehen oder durch eine Belastung einer Kreditkartennummer, die beim zentralen Server 230 in einem vorausgegangenen Registriervorgang hinterlegt worden ist. Dabei ermittelt der zentrale Server 230, je nachdem, wie das mobile Endgerät 220 im Schritt 335 die Datenpakete zum zentralen Server 230 übermittelt hat, das zu belastende Konto mittels der Mobilfunknummer des mobilen Endgeräts 220, mittels der IP-Adresse des mobilen Endgeräts 220 oder mittels der MAC-Adresse des mobilen Endgeräts 220. Das Konto, auf das der zu zahlende Betrag gut geschrieben wird, wird vom zentralen Server 230 in Ausführungsformen der Erfindung mittels der Identifikationsnummer des Terminals oder der Dienstleistung festgestellt. Die Zahlung kann hierbei sofort ausgeführt werden oder per Zahlanweisung verzögert. Werden die Kontrollinformationen vom mobilen Endgerät 220 nicht bestätigt, so bricht der Prozess ab.

In manchen Ausführungsformen der Erfindung wird nun im Schritt 370 ermittelt, ob die Zahlung erfolgreich war. Falls die Zahlung erfolgreich war, sendet der zentrale Server 230 im Schritt 375 eine Bestätigungsnachricht. Diese Bestätigungsnachricht wird in manchen Ausführungsformen direkt an das Terminal 210 gesendet, beispielsweise über das Internet oder über ein Mobilfunknetz. In anderen Ausführungsformen wird die Bestätigungsnachricht an das weitere mobile Endgerät 250, wiederum über das Internet oder über ein Mobilfunknetz, gesendet. In wiederum anderen Ausführungsformen sendet der zentrale Server 230 die Bestätigungsnachricht an das mobile Endgerät 220 über das Internet oder über ein Mobilfunknetz in Form eines mehrdimensionalen Barcodes, der die Bestätigungsnachricht kodiert. Dieser, vom zentralen Server 230 erzeugte, mehrdimensionale Barcode kann auf dem Display 220-1 des mobilen Endgeräts 220 angezeigt und vom Terminal 210 oder vom weiteren mobilen Endgerät 250 mittels einer Kamera oder eines Scanners eingelesen und dann weiterverarbeitet werden.

Die Zieladresse, an die die Bestätigungsnachricht gesendet wird, wird vom zentralen Server 230 aus dem dekodierten und entschlüsselten mehrdimensionalen Barcode 205 ermittelt. Die Bestätigungsnachricht kann dabei beispielsweise entweder eine Zahlungsbestätigung oder eine Empfangsbestätigung des mehrdimensionalen Barcodes 205 enthalten.

In manchen Ausführungsformen der Erfindung ist es nötig, dass sich eine Person, die das mobile Endgerät 220 betreibt, beim zentralen Server 230 registriert, bevor das Verfahren der Fig. 3 ausgeführt werden kann. In anderen Ausführungsformen kann auch das mobile Endgerät 220 direkt registriert werden oder es findet keine Registrierung statt und das mobile Endgerät 220 hängt an den mehrdimensionalen Barcode 205, den das mobile Endgerät 220 im Schritt 335 an den zentralen Server 230 überträgt, Informationen bezüglich eines Kontos oder einer Kreditkarte an, mittels derer der zentrale Server 230 eine Zahlung durchführen kann.

Eine Registrierung des Betreibers des mobilen Endgeräts 220 oder des mobilen Endgeräts 220 kann beispielsweise durch Einrichten eines Benutzerkontos für den Benutzer des mobilen Endgeräts 220 beim zentralen Server 230 stattfinden. Dies kann beispielsweise über eine Eingabemaske mittels des Internets erledigt werden. Hierzu verknüpft beispielsweise der Benutzer des mobilen Endgeräts die Mobilfunknummer des mobilen Endgeräts oder die MAC-Adresse des mobilen Endgeräts mit dem Benutzerkonto. Des Weiteren gibt er Kontodaten an, auf die der zentrale Server zugreifen kann. In anderen Ausführungsformen gibt der Benutzer eine Kreditkartennummer an, die vom zentralen Server 230 belastet werden kann, falls eine Zahlung ansteht.

Im Folgenden sollen praktische Szenarien angegeben werden, in denen das System 200 der Fig. 2 und das Verfahren der Fig. 3 Anwendung finden können.

### Praktisches Szenario: Taxi/Mietwagen

In dieser Ausführungsform entspricht das Terminal 210 einem Taxameter und das mobile Endgerät 220 einem Mobiltelefon eines Fahrgastes einer Taxifahrt. Das weitere mobile Endgerät 250 ist in diesem Beispiel ein Mobiltelefon des Fahrers des Taxis. Der zentrale Server 230 ist die Abrechnungsstelle für die Taxifahrt.

Eine Taxifahrt wird wie gewohnt durchgeführt. Bei Erreichen des Ziels schaltet der Taxifahrer den Taxameter in KASSE, womit der endgültige Fahrpreis berechnet wird. Der Fahrgast gibt als Zahlungswunsch die "Codeabrechnung" an, d.h. ein dem Schalter 210-2 äquivalenter Schalter wird betätigt, um anzuzeigen, dass kodierte Daten vom mobilen Endgerät 220 zu einem zentralen Server 230 übertragen werden sollen. Der Fahrer wählt am Taxameter diese Zahlungsart aus (beispielsweise durch Drücken des Knopfs 210-2), womit entweder eine weitere Eingabemaske für die Mobilfunknummer des Fahrers für die spätere Zahlungsbestätigung angezeigt wird, die der Fahrer dann mittels Tasten des Bedienfeldes 210-4 eingeben kann oder eine fest hinterlegte Mobilfunknummer aus dem Speicher des Taxameters geladen wird. Der Taxameter erstellt ein verschlüsseltes Gesamtdatenpaket, das neben notwendigen Protokolldaten u.a. aus folgenden Daten besteht: Zielnummer der Abrechnungsstelle (z.B. Mobilfunknummer oder IP-Adresse), Fahrpreis (Gesamtfahrpreis netto, Mehrwertsteuersatz, Fahrpreis und Zuschlag), die vorher eingegebene oder aus dem Speicher geladene Mobilfunknummer des Fahrers, fahrzeugspezifische Daten (z.B. die Konzessionsnummer des Taxis und/oder Seriennummer des Taxameters), gegebenenfalls Datum und Uhrzeit der Fahrt, gegebenenfalls den Tarif und gegebenenfalls weitere relevante Daten für die Fahrtabrechnung. Aus dem verschlüsselten Gesamtdatenpaket erzeugt der Taxameter einen mehrdimensionalen Barcode. Im Falle eines 2D-Barcodes (beispielsweise eines QR-Codes) kann dieser am Display des Taxameters oder auf einem Ausdruck angezeigt werden. Der Fahrgast kann diesen Barcode mit seinem fotofähigen Mobiltelefon 220 oder einer anderen technischen Einheit mit Foto- oder Scanfunktion ablichten. Hierzu ist gegebenenfalls eine spezielle Applikation auf dem Mobiltelefon notwendig. Dieser gescannte oder abfotografierte Barcode wird an die entsprechende Abrechnungsstelle verschlüsselt und gesichert übermittelt und dort dekodiert. Zur Überprüfung der Richtigkeit der Daten erhält der Fahrgast noch einmal eine Kontrollinformation übermittelt und bestätigt diese bei Übereinstimmung. Der abzurechnende Betrag kann daraufhin zur Zahlung angewiesen werden (gegebenenfalls ist eine entsprechende vorherige Nutzerregistrierung notwendig). Der Fahrer erhält auf die eingegebene oder aus dem Taxameterspeicher geladene Telefonnummer eine Bestätigungsmail für den erfolgreichen Zahlvorgang. Der Zahlvorgang ist abgeschlossen und der Fahrgast kann das Taxi verlassen.

### Praktisches Szenario: ÖPNV (öffentlicher Personennahverkehr)

An einer Haltestelle des ÖPNV befinden sich mehrdimensionale Barcodes je nach Linie des öffentlichen Personennahverkehrs. Diese Codes beinhalten neben notwendigen Protokolldaten verschlüsselt u.a. das Gültigkeitsdatum der mehrdimensionalen Barcodes, Haltestellenname, Haltestellenidentifikation und gewünschte Liniennummern des ÖPNV. Der Fahrgast kann den mehrdimensionalen Barcode für seine ausgewählte Linie mit seinem fotofähigen Mobiltelefon oder einer anderen technischen Einheit mit Foto- oder Scanfunktion ablichten. Hierzu ist gegebenenfalls eine spezielle Applikation auf dem Mobiltelefon notwendig. In anderen Ausführungsformen dieses Beispiels ist an der Haltestelle des ÖPNV ein Fahrkartenautomat aufgestellt, der ein Display hat, auf dem dann, je nach Auswahl der Fahrstrecke, ein mehrdimensionale Barcode passend zur ausgewählten Fahrstrecke angezeigt wird. Der Fahrgast kann dann den mehrdimensionalen Barcode vom Display des Fahrkartenautomats abfotografieren oder einscannen. Ähnlich zu vorhergehenden Ausführungsformen kann der Fahrkartenautomat auch über eine Druckereinheit verfügen, die dann den mehrdimensionalen Barcode auf Papier druckt, worauf dieser mit einem fotofähigen Handy abfotografiert oder eingescannt werden kann. Der gescannte oder abfotografierte mehrdimensionale Barcode wird an die entsprechende Abrechnungsstelle verschlüsselt und gesichert übermittelt und dort dekodiert. Zur Überprüfung der Richtigkeit der Daten erhält der Fahrgast noch einmal eine Kontrollinformation auf sein Mobiltelefon übermittelt und bestätigt diese bei Übereinstimmung. Der abzurechnende Betrag kann daraufhin zur Zahlung angewiesen werden. Auch hier kann gegebenenfalls eine vorhergehende Nutzerregistrierung notwendig sein. Der Zahlvorgang ist abgeschlossen und der Fahrgast kann das Verkehrsmittel betreten. Als Fahrschein kann hier der Fahrgast beispielsweise eine elektronische Fahrkarte in Form einer MMS zugesandt bekommen oder einen Ausdruck vom Fahrkartenautomat erhalten.

### Praktisches Szenario: sonstiges Ticketingsystem am Beispiel Parkautomat

In diesem Szenario entspricht das Terminal 210 einem Parkscheinautomat, der beispielsweise auf einem Parkplatz installiert ist. An diesem Parkautomat will ein Kunde ein Ticket ziehen. Der Kunde wählt die gewünschte Parkzeit aus. Außerdem wählt der Kunde als Zahlungswunsch die "Codeabrechnung" aus. Der Parkautomat erstellt ein verschlüsseltes Gesamtdatenpaket, das neben notwendigen Protokolldaten u.a. aus folgenden Daten besteht: Parkautomatenidentifikation, Mobilfunknummer bzw. IP-Adresse des Parkautomaten, ausgewählte Parkdauer, berechneter Preis, gegebenenfalls Datum und Uhrzeit und gegebenenfalls Tarif. Aus dem verschlüsselten Gesamtdatenpaket wird ein mehrdimensionaler Barcode erzeugt. Im Falle eines 2D-Barcodes (z.B. QR-Code) kann dieser im Display des Parkautomats oder auf einem Ausdruck angezeigt werden. Der Kunde kann diesen Code mit seinem fotofähigen Mobiltelefon oder einer anderen technischen Einheit mit Foto- oder Scanfunktion ablichten. Hierzu ist gegebenenfalls eine spezielle Applikation auf dem Mobiltelefon notwendig. Der gescannte oder abfotografierte Barcode wird an die entsprechende Abrechnungsstelle verschlüsselt und gesichert übermittelt und dort dekodiert. Zur Überprüfung der Richtigkeit der Daten erhält der Kunde noch einmal eine Kontrollinformation übermittelt und bestätigt diese bei Übereinstimmung. Der abzurechnende Betrag kann daraufhin zur Zahlung angewiesen werden. Auch hier ist gegebenenfalls eine entsprechende vorherige Nutzerregistrierung notwendig. Der Parkautomat erhält auf die übermittelte Mobilfunknummer bzw. IP-Adresse eine Bestätigung. Der Parkautomat erstellt einen Parkschein und der Zahlvorgang ist abgeschlossen. Der Kunde kann den Parkschein entnehmen und sein Fahrzeug abstellen.

Eine Vielzahl weiterer Szenarien ist denkbar. Das System 200 und das Verfahren der Fig. 3 können beispielsweise beim Zahlungsverkehr in öffentlichen Transportmitteln und weiteren Dienstleistungen Anwendung finden. In anderen Ausführungsformen kann das Terminal 210 auch eine Kasse in einem Supermarkt sein oder ein beliebiges Bedienterminal einer Einrichtung. Dabei kann das Terminal 210 beispielsweise auch eine Einrichtung aktivieren, wie beispielsweise ein Solarium. In diesem Beispiel wählt der Kunde eine Zeit aus, für die er das Solarium benutzen will. Das Terminal, das an dem Solarium angeschlossen ist, erstellt daraufhin, wie im Verfahren der Fig. 3 beschrieben, einen mehrdimensionalen Barcode und stellt diesen Code dem Nutzer des Solariums zum Abruf bereit. Der Nutzer des Solariums fotografiert den Code mit seinem fotofähigen Mobiltelefon ab und sendet den so gewonnen mehrdimensionalen Barcode in Übereinstimmung mit dem Verfahren der Fig. 3 an eine zentrale Abrechnungsstelle 230. Wird die Zahlung ausgeführt, bestätigt die zentrale Abrechnungsstelle 230 dem Terminal 210 die Zahlung. Nun aktiviert das Terminal 210 das Solarium für die bezahlte Zeit und der Kunde kann dies nutzen.

## Patentansprüche

1. Verfahren zur Übermittlung kodierter Daten von einem Terminal (210) zu einem zentralem Server (230) mittels eines mobilen Endgeräts (220), mit den folgenden Schritten:
Erzeugen (305) von Daten durch das Terminal, wobei die Daten Informationen bezüglich einer Zahlung enthalten;
Kodieren (325) der Daten in einen mehrdimensionalen Barcode (205);
Abrufen (330) des mehrdimensionalen Barcodes vom Terminal durch das mobile Endgerät; und
Übertragen (335) von Datenpaketen, in denen die mit dem mehrdimensionalen Barcode kodierten Informationen enthalten sind, vom mobilen Endgerät zum zentralen Server, wobei das Terminal außerhalb des Übertragungspfads zwischen dem mobilen Endgerät und dem zentralen Server liegt.

2. Verfahren nach Anspruch 1, wobei das Abrufen des mehrdimensionalen Barcodes vom Terminal durch das mobile Endgerät umfasst:
Anzeigen des mehrdimensionalen Barcodes auf einem Display des Terminals, wobei der mehrdimensionale Barcode die Daten in mindestens zwei dimensionaler Weise kodiert, wobei die mindestens zwei Dimensionen räumliche Dimensionen, die zeitliche Dimension und/oder Farbdimensionen umfassen; und
Einlesen des mehrdimensionalen Barcodes in das mobile Endgerät.

3. Verfahren nach Anspruch 1, wobei das Abrufen des mehrdimensionalen Barcodes vom Terminal durch das mobile Endgerät umfasst:
Ausdrucken des mehrdimensionalen Barcodes durch das Terminal, wobei der mehrdimensionale Barcode die Daten in mindestens zwei dimensionaler Weise kodiert, wobei die mindestens zwei Dimensionen räumliche Dimensionen und/oder Farbdimensionen umfassen; und
Einlesen des mehrdimensionalen Barcodes in das mobile Endgerät.

4. Verfahren nach einem der Ansprüche 2 oder 3, wobei der mehrdimensionale Barcode ein zwei- oder dreidimensionaler Barcode ist und das Einlesen des mehrdimensionalen Barcodes in das mobile Endgerät das Abfotografieren oder Scannen des mehrdimensionalen Barcodes mittels einer Kamera beziehungsweise Scanners des mobilen Endgeräts umfasst.

5. Verfahren nach Anspruch 1, wobei das Abrufen des mehrdimensionalen Barcodes vom Terminal durch das mobile Endgerät umfasst:
Abrufen des mehrdimensionalen Barcodes vom Terminal durch das mobile Endgerät mittels hochfrequenter Nachrichtenübertragung.

6. Verfahren nach einem der Ansprüche 1 bis 5, wobei der mehrdimensionale Barcode einen Zählwert enthält, der im Zuge der Erzeugung der Daten vom Terminal ermittelt worden ist.

7. Verfahren nach einem der Ansprüche 1 bis 6, wobei das Verfahren weiter umfasst:
datenmanipulationssicheres Verschlüsseln der erzeugten Daten durch das Terminal bevor die Daten in einen mehrdimensionalen Barcode kodiert werden.

8. Verfahren nach einem der Ansprüche 1 bis 7, wobei die Informationen bezüglich der Zahlung einen zu zahlenden Betrag, eine Zieladresse des zentralen Servers, eine Identifikationsnummer des Terminals sowie eine Zieladresse des Terminals und/oder eine Zieladresse eines weiteren mobilen Endgeräts umfassen.

9. Verfahren nach Anspruch 8, wobei die Zieladresse des Servers eine Mobilfunknummer oder IP-Adresse, die Identifikationsnummer des Terminals eine Seriennummer des Terminals und die Zieladresse des Terminals und/oder des weiteren mobilen Endgeräts eine Mobilfunknummer oder IP-Adresse ist

10. Verfahren nach einem der Ansprüche 1 bis 7, wobei das Terminal ein Taxameter, ein Fahrkartenautomat oder ein Parkautomat ist und wobei die Informationen bezüglich der Zahlung im Falle eines Taxameters die Seriennummer des Taxameters als Identifikationsnummer des Terminals und/oder eine Taxikonzessionsnummer als Identifikationsnummer einer Dienstleistung enthalten.

11. Verfahren nach einem der Ansprüche 1 bis 10, wobei die Datenpakete vom mobilen Endgerät zum zentralen Server über ein Mobilfunknetz oder über das Internet übertragen werden.

12. Verfahren nach einem der Ansprüche 1 bis 11, wobei:
der zentrale Server die Zahlung entweder sofort oder per Zahlanweisung ausführt, nachdem die Datenpakte vom mobilen Endgerät zum zentralen Server übertragen worden sind;
das Terminal vom Empfänger der Zahlung betrieben wird; und
das mobile Endgerät vom Zahlenden betrieben wird.

13. Verfahren nach einem der Ansprüche 7 bis 12, wobei der zentrale Server die empfangenen Datenpakete dekodiert und entschlüsselt.

14. Verfahren nach einem der Ansprüche 12 oder 13, wobei das Verfahren weiter umfasst:
Empfangen von Kontrollinformationen vom zentralen Server durch das mobile Endgerät, wobei die Kontrollinformationen auf Grundlage der an den zentralen Server gesendeten Informationen bezüglich der Zahlung erstellt worden sind oder mit den an den zentralen Server gesendeten Informationen bezüglich der Zahlung identisch sind; und
Bestätigen der Kontrollinformationen durch das mobile Endgerät bevor die Zahlung vom zentralen Server ausgeführt wird.

15. Verfahren nach einem der Ansprüche 1 bis 14. wobei das Verfahren weiter umfasst:
Registrieren eines Benutzers des mobilen Endgeräts beim zentralen Server bevor Datenpakete, in denen die mit dem mehrdimensionalen Barcode kodierten Informationen enthalten sind, vom mobilen Endgerät zum zentralen Server übertragen werden.

16. Verfahren nach Anspruch 15, wobei das Registrieren umfasst:
Einrichten eines Benutzerkontos für den Benutzer beim zentralen Server; und
Hinterlegen einer Kreditkartennummer oder einer Bankverbindung mittels derer der zentrale Server eine bargeldlose Zahlung für den Inhaber des Benutzerkontos ausführt.

17. Verfahren nach einem der Ansprüche 8 oder 9, wobei der Server eine Nachricht an das Terminal und/oder an das weitere mobile Endgerät sendet, welche den Empfang der Datenpakete vom mobilen Endgerät bestätigt und/oder die Ausführung der Zahlung anzeigt

18. Terminal (210) zur Verwendung in einem Übertragungssystem (200) bestehend aus dem Terminal, einem zentralen Server (230) und einem mobilen Endgerät (220), wobei das Terminal außerhalb des Übertragungspfads zwischen dem mobilen Endgerät und dem zentralen Server liegt, wobei das Terminal umfasst:
Mittel zur Erzeugung von Daten, die Informationen bezüglich einer Zahlung enthalten;
Mittel zum Kodieren der Daten in einen mehrdimensionalen Barcode (205); und
Mittel zur Bereitstellung des mehrdimensionalen Barcodes zum Abruf durch das mobile Endgerät, wobei der mehrdimensionale Barcode Informationen enthält, die vom mobilen Endgerät in Datenpakten an den zentralen Server übermittelt werden.

19. Terminal nach Anspruch 18 zur Durchführung der terminalseitigen Schritte des Verfahrens nach einem der Ansprüche 2 bis 17.

20. Mobiles Endgerät (220) zur Verwendung in einem System (200) mit einem zentralen Server (230) und einem Terminal (210), das Daten, die Informationen bezüglich einer Zahlung enthalten, erzeugt, in einem mehrdimensionalen Barcode (205) kodiert und außerhalb eines Übertragungspfads zwischen dem mobilen Endgerät und dem zentralen Server liegt, wobei das mobile Endgerät umfasst:
Mittel zum Abrufen des mehrdimensionalen Barcodes vom Terminal; und
Mittel zum Übertragen von Datenpaketen, in denen die mit dem mehrdimensionalen Barcode kodierten Informationen enthalten sind, zum zentralen Server über den Übertragungspfad.

21. Mobiles Endgerät nach Anspruch 19 zur Durchführung der mobilen endgerätseitigen Schritte des Verfahrens nach einem der Ansprüche 2 bis 17.
